# EUROPEAN PATENT SPECIFICATION

(11) **EP 3 450 779 B1**
(45) Date of publication and mention of the grant of the patent: **04.03.2020**
(21) Application number: 18191091.0
(22) Date of filing: 28.08.2018
(51) Int. Cl.: F16C 11/06, F16C 23/04, F16C 33/04, F16C 17/10

(54) **ARRANGEMENT AND METHOD FOR MAINTAINING A POSITION OF A SPRING-BALL ON A SHAFT**
ANORDNUNG UND VERFAHREN ZUR AUFRECHTERHALTUNG EINER POSITION EINER FEDERKUGEL AUF EINER WELLE
AGENCEMENT ET PROCÉDÉ POUR MAINTENIR UNE POSITION D'UNE BILLE ELASTIQUE SUR UN ARBRE

(30) Priority: 31.08.2017 US 201762552765 P
(43) Date of publication of application: 06.03.2019
(73) Proprietor: Schaublin SA, 2800 Delemont (CH)
(72) Inventor: Charmillot, Philippe, CH-2765 Rebeuvelier (CH)
(74) Representative: Ström & Gulliksson AB

(56) References cited:
- EP-A1- 2 759 728
- US-A- 3 539 234
- US-A1- 2015 362 007

## Description

### FIELD OF THE INVENTION

The present invention relates generally to a ball and shaft arrangement having a circumferential movement limiter and an axial movement limiter system for maintaining an axial and circumferential position of a spring-ball on a shaft, and more particularly to an axial pin and keyway configuration to prevent rotation of the spring-ball on the shaft combined with flanges radially extending from the shaft to limit axial movement of the spring-ball on the shaft.

### BACKGROUND OF THE INVENTION

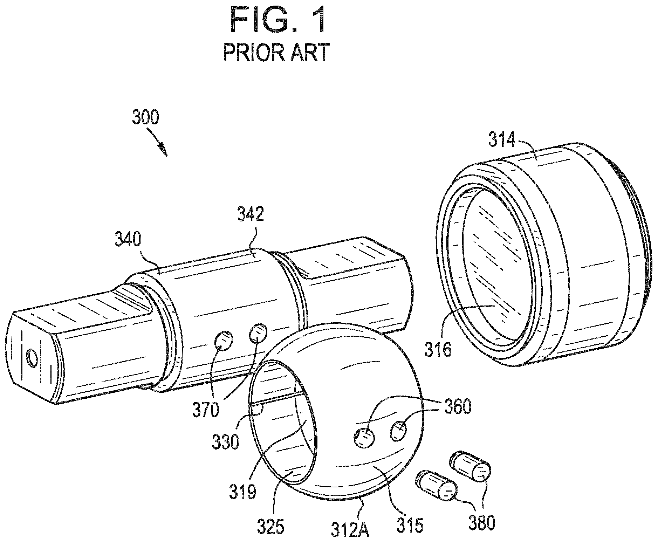

European Patent Specification No. EP 2,986,862 B1 discloses a spherical plain bearing with a spring-ball configuration, as shown in prior art FIG. 1, which is generally referred to herein as a spring-ball bearing 300. The prior art spring-ball bearing 300 includes an inner member 312A that has a spherical exterior surface 315 and a generally cylindrical interior surface 325 that defines an interior area 319 of the inner member 312A. The inner member 312A has an axial slit 330 extending therethrough. The inner member 312A also has two apertures 360 that extend radially through the inner member 312A. The inner member 312A is mounted on a shaft 340 so that the cylindrical interior surface 325 is fit over a cylindrical exterior surface 342 of the shaft 340. The shaft 340 has two apertures 370 extending radially therein. Each of the apertures 360 and the apertures 370 is configured to receive a radially extending pin 380 therein to maintain the axial and circumferential position of the ball 312A in relation to the shaft 340. The spring-ball bearing 300 includes an outer race 314 that defines an inner spherical surface 316 contoured to a shape complementary to the spherical exterior surface 315 of the ball 312A. The axial slit 300 allows the inner member 312A to elastically expand and contract in a radial direction to compensate for wear and to maintain a relatively constant operating torque required to rotate the inner member 312A relative to the outer race 314.

However, there is a need for an improved configuration and assembly method for maintaining the axial and circumferential position of the inner member 312A relative to the shaft 340 while allowing the inner member 312A to elastically expand and contract in a radial direction.

US3539234 discloses a one-piece bushing of resilient and deformable plastic material for permitting rotational and angular movement of a shank element relative to a bore. The bushing includes a substantially spherical outer peripheral surface having deformable portions, which are depressed into adjacent portions by compression forces applied to the bushing by the shaft and bore wall.

### SUMMARY OF THE INVENTION

There is disclosed herein a ball and shaft arrangement for a spherical bearing which includes a spring-ball that has a spherical exterior surface and an interior area defined by an inner surface extending between a first axial end and a second axial end thereof. The inner surface defines a first inside diameter and a slit extending through the spring-ball from the first axial end to the second axial end. The slit is configured to allow the spring-ball to radially flex. The shaft has a ball receiving surface formed thereon and is disposed partially in the interior area of the spring-ball. A circumferential movement limiter (e.g., a key) is in communication with the spring-ball and the shaft. The circumferential movement limiter is configured to prevent circumferential rotation of the spring-ball relative to the shaft. An axial movement limiter system is formed in portions of the spring-ball and the shaft. The axial movement limiter system is separate from the circumferential movement limiter and is configured to limit axial movement of the spring-ball relative to the shaft. The ball and shaft arrangement comprises at least one of(a) the circumferential movement limiter includes an axial extending first keyway formed in the inner surface of the spring-ball and an axial extending second keyway formed in the ball receiving surface. The first keyway and the second keyway are aligned with one another and a key is disposed in the first keyway and the second keyway; and (b) the axial movement limiter system includes the shaft having a first flange and a second flange each extending radially outward from the ball receiving surface. The first axial end of the spring-ball abuts a portion of the first flange and the second axial end of the spring-ball abuts a portion of the second flange.

In one embodiment, (a) the circumferential movement limiter includes an axial extending first keyway formed in the inner surface of the spring-ball and an axial extending second keyway formed in the ball receiving surface. The first keyway and the second keyway are aligned with one another and a key is disposed in the first keyway and the second keyway; and (b) the axial movement limiter system includes the shaft having a first flange and a second flange each extending radially outward from the ball receiving surface. The first axial end of the spring-ball abuts a portion of the first flange and the second axial end of the spring-ball abuts a portion of the second flange.

In one embodiment, the first flange and the second flange extends circumferentially around the shaft. In one embodiment, the first flange extends circumferentially around the shaft. In one embodiment, the second flange extends circumferentially around the shaft.

In one embodiment, the first flange has a first outside diameter, the second flange has a second outside diameter and the ball receiving area has a third outside diameter. The first outside diameter is greater than the second outside diameter and the third outside diameter, and the second outside diameter are greater than the third outside diameter.

In one embodiment, the spring-ball is configured to radially flex so that the first inside diameter is greater than the first outside diameter for installation and removal of the spring-ball from the shaft.

In one embodiment, the spring-ball is configured to radially flex so that the first outside diameter is less than the second outside diameter.

In one embodiment, a portion of the inner surface of the spring-ball is cylindrical. In one embodiment, a portion of the inner surface is conical and tapers radially inward toward the second axial end of the spring-ball. In one embodiment, (a) a portion of the inner surface of the spring-ball is cylindrical; and (b) a portion of the inner surface is conical and tapers radially inward toward the second axial end of the spring-ball.

In one embodiment, a portion of the ball receiving surface of the shaft is cylindrical. In one embodiment, a portion of the ball receiving surface is conical and tapers radially inward towards the second flange. In one embodiment, (a) a portion of the ball receiving surface of the shaft is cylindrical; and (b) a portion of the ball receiving surface is conical and tapers radially inward towards the second flange.

In one embodiment, the second flange includes an axially inward facing shoulder and radially outer surface comprising a conical portion that tapers radially inward, axially away from the axially inward facing shoulder.

There is disclosed herein a ball and shaft arrangement for a spherical bearing that includes a spring-ball that is removably installed on a shaft. The spring-ball has a spherical exterior surface and an interior area defined by an inner surface that extends between a first axial end and a second axial end thereof. The inner surface defines a first inside diameter. The spring-ball has a slit extending through the spring-ball from the first axial end to the second axial end thereof. The slit is configured to allow the spring-ball to radially flex. The spring-ball also has an axial extending first keyway formed in the inner surface. The shaft has a ball receiving surface formed thereon. In addition, the shaft has a first flange and a second flange each of which extend radially outward from the ball receiving surface. The shaft also includes an axial extending second keyway formed in the ball receiving surface. The spring-ball surrounds a portion of the ball receiving surface such that the first keyway and the second keyway are aligned with one another. The first axial end of the spring-ball abuts a portion of the first flange and the second axial end of the spring-ball abuts a portion of the second flange to prevent axial movement of the spring-ball relative to the shaft. A key is disposed in the first keyway and the second keyway to prevent circumferential rotation of the spring-ball relative to the shaft.

In one embodiment, the first flange and the second flange extends circumferentially around the shaft. In one embodiment, the first flange extends circumferentially around the shaft. In one embodiment, the second flange extends circumferentially around the shaft.

In one embodiment, the first flange has a first outside diameter, the second flange has a second outside diameter and the ball receiving area has a third outside diameter. The first outside diameter is greater than the second outside diameter and the third outside diameter. The second outside diameter is greater than the third outside diameter.

The spring-ball is configured to radially flex so that the first inside diameter is greater than the first outside diameter for installation and removal of the spring-ball from the shaft. For example, the spring-ball is configured to radially flex so that the first outside diameter is less than the second outside diameter.

In one embodiment, a portion of the inner surface of the spring-ball is cylindrical. In one embodiment, a portion of the inner surface is conical and tapers radially inward toward the second axial end of the spring-ball.

In one embodiment, a portion of the ball receiving surface of the shaft is cylindrical. In one embodiment, a portion of the ball receiving surface is conical and tapers radially inward towards the second flange.

In one embodiment, the second flange has an axially inward facing shoulder and a radially outer surface that includes a conical portion that tapers radially inward, axially away from the axially inward facing shoulder.

There is further disclosed herein, a method for installing a ball on a shaft. The method includes providing a spring-ball that has a spherical exterior surface and an interior area defined by an inner surface extending between a first axial end and a second axial end thereof. The inner surface defines a first inside diameter. A slit extends through the spring-ball from the first axial end to the second axial end, and an axial extending first keyway is formed in the inner surface. The method includes providing a shaft that has a ball receiving surface formed thereon. The shaft has a first flange and a second flange each extending radially outward from the ball receiving surface. The shaft has an axial extending second keyway formed in the ball receiving surface. The method also includes providing a key. The key is disposed the first keyway or the second keyway and then the spring-ball is expanded over the second flange. The spring-ball is slid over the second flange so that the key is disposed in both the first keyway and the second keyway. The spring-ball is then slid off of the second flange so that spring-ball is positioned between the first flange and the second flange. As the spring-ball slides off of the second flange, the spring-ball contracts around the ball receiving surface of the shaft.

### BRIEF DESCRIPTION OF THE DRAWINGS

FIG. 1 is an exploded view of a prior art spherical bearing with a spring-ball configuration;
FIG. 2 is a perspective view of a spring-ball and shaft arrangement of the present invention, shown in an initial assembly state;
FIG. 3 is a perspective view of a spring-ball and shaft arrangement of the present invention, shown in an intermediate assembly state;
FIG. 4 is a perspective view of a spring-ball and shaft arrangement of the present invention, shown in an assembled state;
FIG. 5 is a cross sectional view of the spring-ball and shaft arrangement taken across section 5-5 of FIG. 4 and shown with an outer ring;
FIG. 5A is an enlarged view of detail 5A of FIG. 5 including a seal;
FIG. 6 is a cross sectional view of the spring-ball and shaft arrangement taken across section 6-6 of FIG. 4;
FIG. 7 is an enlarged view of detail 7 of FIG. 6; and
FIG. 8 is a perspective view of an alternative spring-ball embodiment.

### DETAILED DESCRIPTION

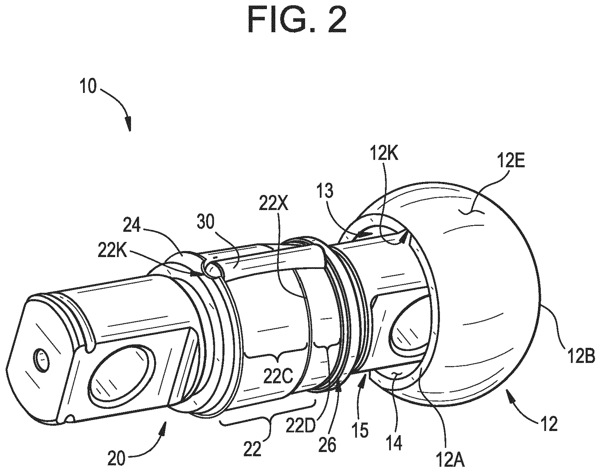

As shown in FIG.2 a ball and shaft arrangement for a spherical bearing is generally designated by the numeral 10. The ball and shaft arrangement 10 includes a spring-ball 12. The spring-ball 12 has a spherical exterior surface 12E and an interior area 13 defined by an inner surface 14 extending between a first axial end 12A and a second axial end 12B of the spring-ball 12.

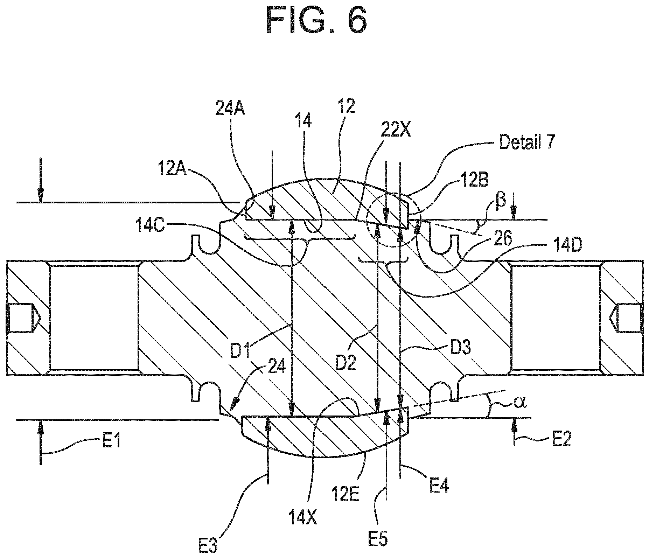

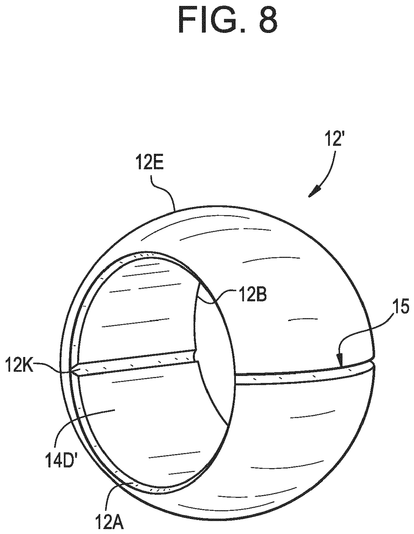

As shown in FIG. 6, the inner surface 14 has a first inside diameter D1 on a cylindrical portion 14C of the inner surface 14. At a transition line 14X, the inner surface 14 transitions into conical inner surface 14D. The conical inner surface 14D tapers radially inward toward the second axial end 12B of the spring-ball 12 at an inner angle α (depicted in FIG. 6), relative to the cylindrical portion 14C. In one embodiment, the angle α is 8 to 23 degrees. The conical inner surface 14D has progressively decreasing second inside diameter D2 and third inside diameter D3, wherein the third inside diameter D3 is less than the second inside diameter D2. While the spring-ball 12 is shown and described as having the conical inner surface 14D, the present invention is not limited in this regard as other inner surface configurations may be employed, including but not limited to an entirely cylindrical inner surface 14D' as shown for the spring-ball 12' in FIG. 8 or an entirely conical inner surface.

As shown in FIG. 2, the spring-ball 12 has a slit 15 extending through the spring-ball 12 from the first axial end 12A to the second axial end 12B. The slit 15 is configured to allow the spring-ball 12 to radially flex. The ball and shaft arrangement 10 includes a circumferential movement limiter (e.g., key 30) that is in communication with the spring-ball 12 and the shaft 20. The spring-ball 12 has an axial extending first keyway 12K formed in the inner surface 14. The first keyway 12K has a semi-circular cross section. However, the present invention is not limited in this regard as other cross sectional configurations for the first keyway 12K may be employed, including but not limited to rectilinear and triangular shaped cross sections. In addition, the first keyway 12K may extend only partially between the first and second axial ends 12A and 12B of the spring-ball 12.

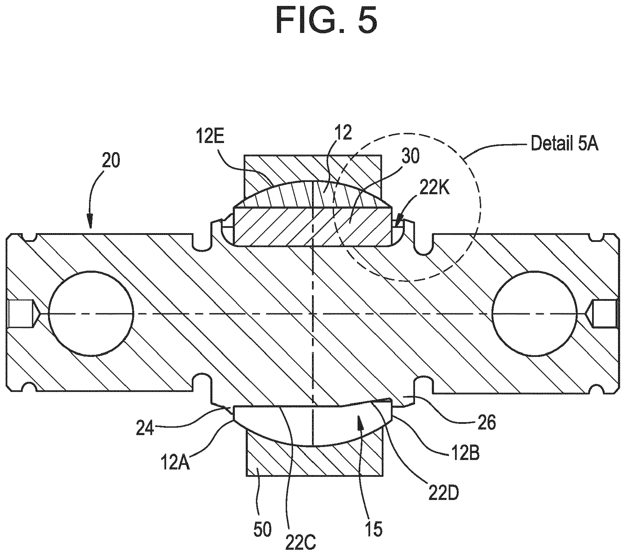

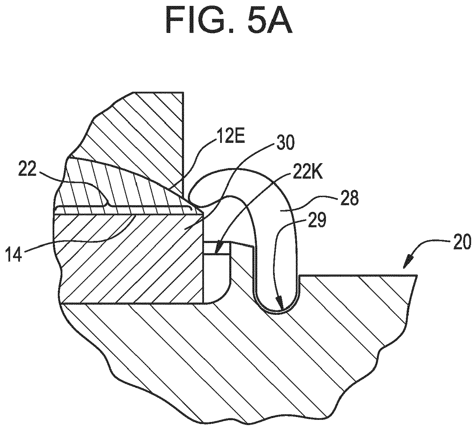

As shown in FIG. 2, the ball and shaft arrangement 10 includes a shaft 20 that has a ball receiving surface 22 formed thereon. The ball and shaft arrangement 10 has an axial movement limiter system that includes a first flange 24 and a second flange 26 each extending radially outward from the ball receiving surface 22 of the shaft 20. The ball receiving surface 22 extends 360 degrees circumferentially around the shaft 20 and extends continuously and axially between the first flange 24 and the second flange 26. The first flange 24 and the second flange 26 extend 360 degrees circumferentially around the shaft 20. The ball receiving surface 22 has a cylindrical exterior surface 22C extending from the first flange 24 to a transition line 22X. As shown in FIG. 5, the cylindrical exterior surface 22C has a first outside diameter E1, shown in FIG. 6. At the transition line 22X, the ball receiving surface 22 transitions into an exterior conical surface 22D, shown in FIG. 5. The exterior conical surface 22D tapers radially inward toward the second flange 26. The exterior conical surface 22D has progressively decreasing fourth outside diameter E4 and fifth outside diameter E5, wherein the fourth outside diameter E4 is less than the fifth outside diameter E5, as shown in FIG. 6.

While the first flange 24 and the second flange 26 are shown and described as extending 360 degrees circumferentially around the shaft 20, the present invention is not limited in this regard as the first flange 24 and/or the second flange 26 may extend partially or intermittently circumferentially around the shaft 20.

As shown in FIGS. 2-5, the shaft 20 has an axial extending second keyway 22K formed in the ball receiving surface 22 and extending between the first flange 24 and the second flange 26. The second keyway 22K has a semi-circular cross section. However, the present invention is not limited in this regard as other cross-sectional configurations for the second keyway 22K may be employed, including but not limited to rectilinear and triangular shaped cross sections. In addition, the second keyway 22K may extend only partially between the first and second flanges 24 and 26. The circumferential movement limiter or key 30 is fitted axially into the first keyway 12K and the second keyway 22K to prevent circumferential rotation of the spring-ball 12 relative to the shaft 20, as described herein.

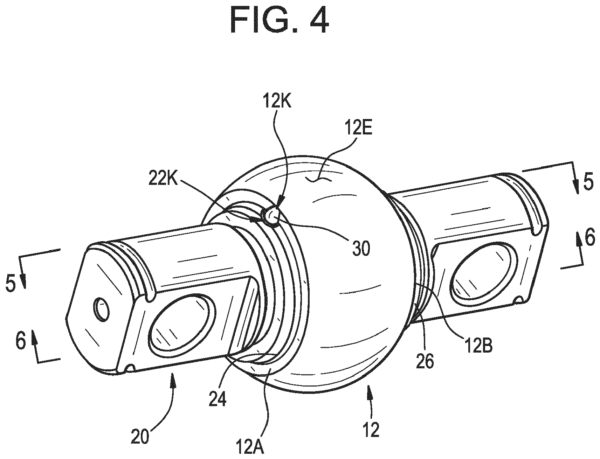

As shown in FIG. 4, the spring-ball 12 is shown assembled on the shaft 20 so that the spring-ball 12 surrounds the ball receiving surface 22 such that the first keyway 12K and the second keyway 22K are aligned with one another and the first axial end 12A of the spring-ball 12 abuts a portion of the first flange 24 and the second axial end 12B of the spring-ball 12 abuts the second flange 26 to prevent axial movement of the spring-ball 12 relative to the shaft 20. A key 30 (e.g., a pin having a circular cylindrical configuration) is disposed in the first keyway 12K and the second keyway 22K to prevent circumferential rotation of the spring-ball 12 relative to the shaft 20. While the key 30 is shown and described as being a pin having a circular cylindrical cross section, the present invention is not limited in this regard as other key configurations may be employed include keys having rectilinear cross sections.

As shown in FIG. 5, the spring-ball 12 has an outer ring 50 (e.g., an outer ring having a spherical interior surface) swaged around the exterior surface 12E of the spring-ball 12. A seal 28 (depicted in FIG. 5A) extends from a seal groove 29 in the shaft 20 to the exterior surface 12E of the spring-ball 12. The seal 28 protects the area between the inner surface 14 of the spring-ball 12 and the key 50 and the area between the inner surface 14 of the spring-ball 12 ball receiving area 22 from contamination by debris. The seal 28 also prevents debris from entering the first keyway 12K and the second keyway 22K. Referring to FIG. 6, the second flange 26 has a frustoconical exterior surface that is tapered a flange angle β, relative to a horizontal axis. In one embodiment, the angle β is 6 to 12 degrees.

As shown in FIG. 6, the first flange 24 has a first outside diameter E1, the second flange 26 has a second outside diameter E2. The ball receiving area 22 has a third outside diameter E3 over the cylindrical portion 14C of the inner surface 14. The first outside diameter E1 of the first flange 24 is greater than the second outside diameter E2 of the second flange 26. The first outside diameter E1 of the first flange 24 is greater than the third outside diameter E3 of the cylindrical portion 14C of the inner surface 14. The second outside diameter E2 is greater than the third outside diameter E3.

The spring-ball 12 is configured to radially flex (e.g., expand radially outward) so that the first inside diameter D1, the second inside diameter D2 and the third inside diameter D3 of the spring-ball 12 is greater than the second outside diameter E2 of the second flange 26, for installation and removal of the spring-ball 12 over the second flange 26 and onto (e.g., assembly) and off (e.g., disassembly) of the shaft 20.

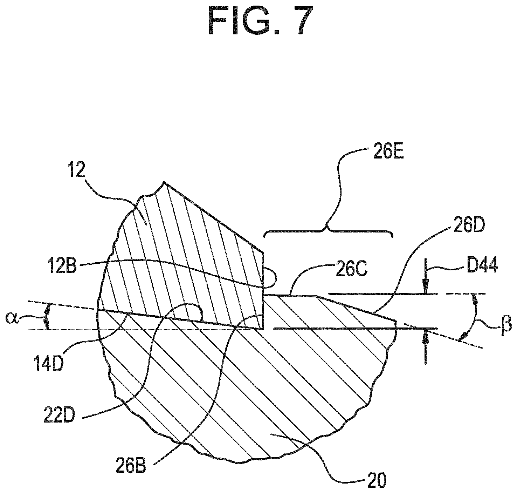

As shown in FIG. 6, the first flange 24 has an axially inward facing shoulder 24A that abuts a portion of the first end 12A of the spring-ball 12. The second flange 26 has an axially inward facing shoulder 26B that a radially inward portion of abuts the second axial end 12B of the spring-ball 12, as shown in FIG. 7. The second flange 26 includes a radially outward facing surface 26E, which includes: (1) a cylindrical portion 26C; and (2) a conical portion 26D that tapers radially inward, axially away from the axially inward facing shoulder 26B. The conical portion 26D has utility in providing adequate radial depth D44 of the axially inward facing shoulder 26B for engagement with the portion of the second axial end 12B of the spring-ball 12.

The present invention includes a method for installing the spring-ball 12 on the shaft 20. The method includes providing the spring-ball 12 that has the spherical exterior surface 12E and the interior area 13 defined by the inner surface 14 extending between the first axial end 12A and the second axial end 12B of the spring-ball 12, as shown in FIG. 2. The inner surface 14 has a first inside diameter D1. The spring-ball 12 has a slit 15 that extends from the first axial end 12A to the second axial end 12B. The spring-ball 12 has an axial extending first keyway 12K formed in the inner surface 14.

The method includes providing the shaft 20 that has the ball receiving surface 22 formed thereon. The shaft 20 has the first flange 24 and the second flange 26 each extending radially outward from the ball receiving surface 22. The shaft 20 has an axial extending second keyway 22K formed in the ball receiving surface 22. A key 30 is also provided.

As shown in FIG. 2, in an initial state of assembly the key 30 is disposed in the second keyway 22K. However, the present method is not limited in this regard, as the key 30 may be disposed in the first keyway 12K.

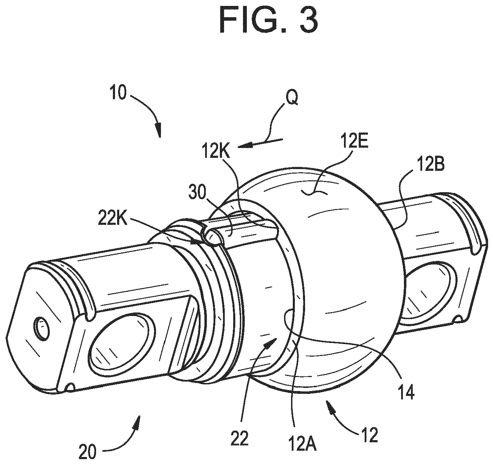

As shown in FIG. 3, in an intermediate state of assembly, the spring-ball 12 is expanded over the second flange 26 (hidden in FIG. 3 by the spring-ball 12). The spring-ball 12 is slid in the direction of the arrow Q towards over the second flange 26, towards the first flange 24, so that the key 30 is disposed in both the first keyway 12K and the second keyway 22K. As shown in the assembled state in FIG. 4, the spring-ball 12 is slid off of the second flange 26 axially towards the first flange 24 so that spring-ball 12 contracts radially inward and is positioned between the first flange 24 and the second flange 26 to prevent axial movement of the spring-ball 12 relative to the shaft 20. The radially inward contracting of the spring-ball 12 allows the portion of the axially inward facing shoulder 26B to abut the second axial end 12B; and to allow the axially inward facing shoulder 24A to abut the portion of the first end 12A of the spring-ball 12, to axially retain the spring-ball 12 on the shaft 20 and between the first flange 24 and the second flange 26. In one embodiment, the method includes contracting (e.g., elastically contracting) the spring-ball 12 around the ball receiving surface 22 of the shaft 20.

Although the present invention has been disclosed and described with reference to certain embodiments thereof, it should be noted that other variations and modifications may be made, and it is intended that the following claims cover the variations and modifications within the true scope of the appended claims.

## Claims

1. A ball and shaft arrangement for a spherical bearing (10), the ball and shaft arrangement comprising:
a spring-ball (12) comprising a spherical exterior surface (12E) and an interior area (13) defined by an inner surface (14) extending between a first axial end (12A) and a second axial end (12B) thereof, the inner surface (14) defining at least a first inside diameter (D1) and a slit (15) extending through the spring-ball (12) from the first axial end (12A) to the second axial end (12B), the slit (15) being configured to allow the spring-ball (12) to radially flex;
a shaft (20) having a ball receiving surface (22) formed thereon, the shaft (20) being disposed at least partially in the interior area (13) of the spring-ball (12);
a circumferential movement limiter in communication with the spring-ball (12) and the shaft (20), the circumferential movement limiter being configured to prevent circumferential rotation of the spring-ball (12) relative to the shaft (20);
an axial movement limiter system formed in portions of the spring-ball (12) and the shaft (20), the axial movement limiter system being separate from the circumferential movement limiter, the axial movement limiter system being configured to limit axial movement of the spring-ball (12) relative to the shaft (20); wherein
at least one of:
(a) the circumferential movement limiter comprises an axial extending first keyway (12K) formed in the inner surface (14) of the spring-ball (12), an axial extending second keyway (22K) formed in the ball receiving surface (22), the first keyway (12K) and the second keyway (22K) being aligned with one another and a key (30) disposed in the first keyway (12K) and the second keyway (22K); and
(b) the axial movement limiter system comprises the shaft (20) having a first flange (24) and a second flange (26) each extending radially outward from the ball receiving surface (22), the first axial end (12A) of the spring-ball (12) abuts a portion of the first flange (24) and the second axial end (12B) of the spring-ball (12) abuts a portion of the second flange (26).

2. The ball and shaft arrangement of claim 1, wherein at least one of the first flange (24) and the second flange (26) extends circumferentially around the shaft (20).

3. The ball and shaft arrangement of claim 1, wherein the first flange (24) has a first outside diameter (E1), the second flange (26) has a second outside diameter (E2) and the ball receiving area (22) has at least one third outside diameter (E3), the first outside diameter (E1) being greater than the second outside diameter (E2) and the at least one third outside diameter (E3), and the second outside diameter (E2) being greater than the at least one third outside diameter (E3).

4. The ball and shaft arrangement of claim 3, wherein the spring-ball (12) is configured to radially flex so that a first inside diameter (D1) of the spring ball is greater than the second outside diameter (E2) of the second flange (26) for installation and removal of the spring-ball (12) from the shaft (20).

5. The ball and shaft arrangement of claim 3, wherein the spring-ball (12) has an inner conical surface having a progressively decreasing second inside diameter (D2) and third inside diameter (D3) and is configured to radially flex so that the at least one the second inside diameter (D2) and the third inside diameter (D3) is greater than the second outside diameter (E2).

6. The ball and shaft arrangement of claim 1, wherein at least a portion of the inner surface (14) of the spring-ball (12) is cylindrical.

7. The ball and shaft arrangement of claim 1, wherein at least a portion of the inner surface (14) is conical and tapers radially inward toward the second axial end (12B) of the spring-ball (12).

8. The ball and shaft arrangement of claim 1, wherein at least a portion of the ball receiving surface (22) of the shaft (20) is cylindrical.

9. The ball and shaft arrangement of claim 1, wherein at least a portion of the ball receiving surface (22) is conical and tapers radially inward towards the second flange (26).

10. The ball and shaft arrangement of claim 1, wherein the second flange (26) comprises an axially inward facing shoulder (26B) and radially outer surface comprising a conical portion (26D) that tapers radially inward, axially away from the axially inward facing shoulder.

11. A method for installing the ball on the shaft (20) of the ball and shaft arrangement of any one of claims 1-10, the method comprising:
providing a spring-ball (12) comprising a spherical exterior surface (12E) and an interior area (13) defined by an inner surface (14) extending between a first axial end (12A) and a second axial end (12B) thereof, the inner surface (14) defining at least a first inside diameter (D1), a slit (15) extending through the spring-ball (12) from the first axial end (12A) to the second axial end (12B), and an axial extending first keyway (12K) formed in the inner surface (14);
providing a shaft (20) having a ball receiving surface (22) formed thereon, the shaft (20) having a first flange (24) and a second flange (26) each extending radially outward from the ball receiving surface (22), and an axial extending second keyway (22K) formed in the ball receiving surface (22);
providing a key (30);
disposing the key (30) in one of the first keyway (12K) and the second keyway (22K);
expanding the spring-ball (12) over the second flange (26);
sliding the spring-ball (12) over the second flange (26) so that the key (30) is disposed in both the first keyway (12K) and the second keyway (22K); and
sliding the spring-ball (12) off of the second flange (26) so that spring-ball (12) is positioned between the first flange (24) and the second flange (26).

12. The method of claim 11, further comprising:
contracting the spring-ball (12) around the ball receiving surface (22) of the shaft (20).

## Patentansprüche

1. Kugel- und Wellenanordnung für ein sphärisches Lager (10), wobei die Kugel- und Wellenanordnung aufweist:
eine Federkugel (12), die eine kugelförmige Außenfläche (12E) und einen inneren Bereich (13), der durch eine Innenfläche (14) definiert ist, die sich zwischen einem ersten axialen Ende (12A) und einem zweiten axialen Ende (12B) dessen erstreckt, wobei die Innenfläche (14) zumindest einen ersten Innendurchmesser (D1) definiert, und einen Schlitz (15) aufweist, der sich durch die Federkugel (12) von dem ersten axialen Ende (12A) zu dem zweiten axialen Ende (12B) erstreckt, wobei der Schlitz (15) dazu eingerichtet ist, der Federkugel (12) zu ermöglichen sich radial zu biegen;
eine Welle (20) mit einer daran ausgebildeten Kugelaufnahmefläche (22), wobei die Welle (20) zumindest teilweise in dem inneren Bereich (13) der Federkugel (12) angeordnet ist;
einen Umfangsbewegungsbegrenzer, der mit der Federkugel (12) und der Welle (20) in Verbindung steht, wobei der Umfangsbewegungsbegrenzer dazu eingerichtet ist, eine Umfangsdrehung der Federkugel (12) relativ zu der Welle (20) zu verhindern; und
ein Axialbewegungsbegrenzungssystem, das in Teilen der Federkugel (12) und der Welle (20) ausgebildet ist, wobei das Axialbewegungsbegrenzungssystem von dem Umfangsbewegungsbegrenzer getrennt ist, wobei das Axialbewegungsbegrenzungssystem dazu eingerichtet ist, eine Axialbewegung der Federkugel (12) relativ zu der Welle (20) zu begrenzen, wobei
zumindest eins von:
(a) der Umfangsbewegungsbegrenzer weist eine sich axial erstreckende erste Keilnut (12K), die in der Innenfläche (14) der Federkugel (12) ausgebildet ist, eine sich axial erstreckende zweite Keilnut (22K), die in der Kugelaufnahmefläche (22) ausgebildet ist, wobei die erste Keilnut (12K) und die zweite Keilnut (22K) zueinander ausgerichtet sind, und eine Passfeder (30) auf, die in der ersten Keilnut (12K) und der zweiten Keilnut (22K) angeordnet ist; und
(b) das Axialbewegungsbegrenzungssystem die Welle (20) mit einem ersten Flansch (24) und einem zweiten Flansch (26) aufweist, die sich jeweils von der Kugelaufnahmefläche (22) radial nach außen erstrecken, wobei das erste axiale Ende (12A) der Federkugel (12) an einem Teil des ersten Flansches (24) und das zweite axiale Ende (12B) der Federkugel (12) an einem Teil des zweiten Flansches (26) anliegt.

2. Kugel- und Wellenanordnung nach Anspruch 1, wobei sich mindestens einer von dem ersten Flansch (24) und dem zweiten Flansch (26) umfänglich um die Welle (20) herum erstreckt.

3. Kugel- und Wellenanordnung nach Anspruch 1, wobei der erste Flansch (24) einen ersten Außendurchmesser (E1), der zweite Flansch (26) einen zweiten Außendurchmesser (E2) und der Kugelaufnahmebereich (22) mindestens einen dritten Außendurchmesser (E3) aufweist, wobei der erste Außendurchmesser (E1) größer als der zweite Außendurchmesser (E2) und der mindestens eine dritte Außendurchmesser (E3) ist, und wobei der zweite Außendurchmesser (E2) größer als der mindestens eine dritte Außendurchmesser (E3) ist.

4. Kugel- und Wellenanordnung nach Anspruch 3, wobei die Federkugel (12) dazu eingerichtet ist, sich radial so zu verbiegen, dass ein erster Innendurchmesser (D1) der Federkugel größer als der zweite Außendurchmesser (E2) des zweiten Flansches (26) ist, um die Federkugel (12) an der Welle (20) anzubringen und von dieser zu entfernen.

5. Kugel- und Wellenanordnung nach Anspruch 3, wobei die Federkugel (12) eine innere konische Fläche mit einem progressiv abnehmenden zweiten Innendurchmesser (D2) und dritten Innendurchmesser (D3) aufweist und dazu eingerichtet ist, sich radial so zu biegen, dass zumindest einer von dem zweiten Innendurchmesser (D2) und dem dritten Innendurchmesser (D3) größer als der zweite Außendurchmesser (E2) ist.

6. Kugel- und Wellenanordnung nach Anspruch 1, wobei zumindest ein Teil der Innenfläche (14) der Federkugel (12) zylindrisch ist.

7. Kugel- und Wellenanordnung nach Anspruch 1, wobei zumindest ein Teil der Innenfläche (14) konisch ist und sich radial nach innen zum zweiten axialen Ende (12B) der Federkugel (12) hin verjüngt.

8. Kugel- und Wellenanordnung nach Anspruch 1, wobei zumindest ein Teil der Kugelaufnahmefläche (22) der Welle (20) zylindrisch ist.

9. Kugel- und Wellenanordnung nach Anspruch 1, wobei zumindest ein Teil der Kugelaufnahmefläche (22) konisch ist und sich radial nach innen zum zweiten Flansch (26) hin verjüngt.

10. Kugel- und Wellenanordnung nach Anspruch 1, wobei der zweite Flansch (26) eine axial nach innen weisende Schulter (26B) und eine radiale Außenfläche mit einem konischen Abschnitt (26D) aufweist, der sich radial nach innen, axial von der axial nach innen weisenden Schulter weg, verjüngt.

11. Verfahren zur Anbringung der Kugel auf der Welle (20) der Kugel- und Wellenanordnung nach einem der Ansprüche 1-10, wobei das Verfahren aufweist:
Bereitstellen einer Federkugel (12), die eine kugelförmige Außenfläche (12E) und einen inneren Bereich (13), der durch eine Innenfläche (14) definiert ist, die sich zwischen einem ersten axialen Ende (12A) und einem zweiten axialen Ende (12B) dessen erstreckt, wobei die Innenfläche (14) zumindest einen ersten Innendurchmesser (D1) definiert, einen Schlitz (15), der sich durch die Federkugel (12) von dem ersten axialen Ende (12A) zu dem zweiten axialen Ende (12B) erstreckt, und eine sich axial erstreckende erste Keilnut (12K), die in der Innenfläche (14) ausgebildet ist, aufweist;
Bereitstellen einer Welle (20) mit einer daran ausgebildeten Kugelaufnahmefläche (22), wobei die Welle (20) einen ersten Flansch (24) und einen zweiten Flansch (26), die sich jeweils von der Kugelaufnahmefläche (22) radial nach außen erstrecken, und eine sich axial erstreckende zweite Keilnut (22K), die in der Kugelaufnahmefläche (22) ausgebildet ist, aufweist;
Bereitstellen einer Passfeder (30);
Anordnen der Passfeder (30) in einer von der ersten Keilnut (12K) und der zweiten Keilnut (22K);
Aufweiten der Federkugel (12) über den zweiten Flansch (26);
Schieben der Federkugel (12) über den zweiten Flansch (26), so dass die Passfeder (30) sowohl in der ersten Keilnut (12K) als auch in der zweiten Keilnut (22K) angeordnet ist; und
Schieben der Federkugel (12) runter von dem zweiten Flansch (26), so dass die Federkugel (12) zwischen dem ersten Flansch (24) und dem zweiten Flansch (26) positioniert ist.

12. Verfahren nach Anspruch 11, weiter aufweisend:
Kontrahieren der Federkugel (12) um die Kugelaufnahmefläche (22) der Welle (20).

## Revendications

1. Agencement bille et arbre pour un roulement à rotule (10), l'agencement bille et arbre comprenant :
une bille à ressort (12) comprenant une surface extérieure sphérique (12E) et une zone intérieure (13) définie par une surface intérieure (14) s'étendant entre une première extrémité axiale (12A) et une seconde extrémité axiale (12B) de celle-ci, la surface intérieure (14) définissant au moins un premier diamètre intérieur (D1) et une fente (15) s'étendant à travers la bille à ressort (12) à partir de la première extrémité axiale (12A) jusqu'à la seconde extrémité axiale (12B), la fente (15) étant configurée pour permettre à la bille à ressort (12) de fléchir radialement ;
un arbre (20) ayant une surface de réception de bille (22) formée sur celui-ci, l'arbre (20) étant disposé au moins partiellement dans la zone intérieure (13) de la bille à ressort (12) ;
un limiteur de mouvement circonférentiel en communication avec la bille à ressort (12) et l'arbre (20), le limiteur de mouvement circonférentiel étant configuré pour empêcher une rotation circonférentielle de la bille à ressort (12) par rapport à l'arbre (20) ;
un système limiteur de mouvement axial formé dans des parties de la bille à ressort (12) et de l'arbre (20), le système limiteur de mouvement axial étant distinct du limiteur de mouvement circonférentiel, le système limiteur de mouvement axial étant configuré pour limiter un mouvement axial de la bille à ressort (12) par rapport à l'arbre (20) ; dans lequel
au moins un parmi :
(a) le limiteur de mouvement circonférentiel comprend une première rainure de clavette (12K) s'étendant axiale formée dans la surface intérieure (14) de la bille à ressort (12), et une seconde rainure de clavette (22K) s'étendant axiale formée dans la surface de réception de bille (22), la première rainure de clavette (12K) et la seconde rainure de clavette (22K) étant alignées l'une sur l'autre et une clavette (30) étant disposée dans la première rainure de clavette (12K) et la seconde rainure de clavette (22K) ; et
(b) le système limiteur de mouvement axial comprend l'arbre (20) ayant un premier bord (24) et un second bord (26) chacun s'étendant radialement vers l'extérieur à partir de la surface de réception de bille (22), la première extrémité axiale (12A) de la bille à ressort (12) vient buter contre une partie du premier bord (24) et la seconde extrémité axiale (12B) de la bille à ressort (12) vient buter contre une partie du second bord (26).

2. Agencement bille et arbre selon la revendication 1, dans lequel au moins un parmi le premier bord (24) et le second bord (26) s'étend de manière circonférentielle autour de l'arbre (20).

3. Agencement bille et arbre selon la revendication 1, dans lequel le premier bord (24) a un premier diamètre extérieur (E1), le second bord (26) a un deuxième diamètre extérieur (E2) et la zone de réception de bille (22) a au moins un troisième diamètre extérieur (E3), le premier diamètre extérieur (E1) étant supérieur au deuxième diamètre extérieur (E2) et à l'au moins un troisième diamètre extérieur (E3), et le deuxième diamètre extérieur (E2) étant supérieur à l'au moins un troisième diamètre extérieur (E3).

4. Agencement bille et arbre selon la revendication 3, dans lequel la bille à ressort (12) est configurée pour fléchir radialement de façon à ce qu'un premier diamètre intérieur (D1) de la bille à ressort soit supérieur au deuxième diamètre extérieur (E2) du second bord (26) pour une installation et un retrait de la bille à ressort (12) par rapport à l'arbre (20).

5. Agencement bille et arbre selon la revendication 3, dans lequel la bille à ressort (12) a une surface conique intérieure ayant un deuxième diamètre intérieur (D2) et un troisième diamètre intérieur (D3) diminuant progressivement et est configurée pour fléchir radialement de façon à ce que l'au moins un le deuxième diamètre intérieur (D2) et le troisième diamètre intérieur (D3) soit supérieur au deuxième diamètre extérieur (E2).

6. Agencement bille et arbre selon la revendication 1, dans lequel au moins une partie de la surface intérieure (14) de la bille à ressort (12) est cylindrique.

7. Agencement bille et arbre selon la revendication 1, dans lequel au moins une partie de la surface intérieure (14) est conique et s'effile radialement vers l'intérieur vers la seconde extrémité axiale (12B) de la bille à ressort (12).

8. Agencement bille et arbre selon la revendication 1, dans lequel au moins une partie de la surface de réception de bille (22) de l'arbre (20) est cylindrique.

9. Agencement bille et arbre selon la revendication 1, dans lequel au moins une partie de la surface de réception de bille (22) est conique et s'effile radialement vers l'intérieur vers le second bord (26).

10. Agencement bille et arbre selon la revendication 1, dans lequel le second bord (26) comprend un épaulement (26B) faisant face vers l'intérieur axialement et une surface extérieure radialement comprenant une partie conique (26D) qui s'effile radialement vers l'intérieur, axialement à distance de l'épaulement faisant face vers l'intérieur axialement.

11. Procédé permettant d'installer la bille sur l'arbre (20) de l'agencement bille et arbre selon l'une quelconque des revendications 1 à 10, le procédé comprenant :
la fourniture d'une bille à ressort (12) comprenant une surface extérieure sphérique (12E) et une zone intérieure (13) définie par une surface intérieure (14) s'étendant entre une première extrémité axiale (12A) et une seconde extrémité axiale (12B) de celle-ci, la surface intérieure (14) définissant au moins un premier diamètre intérieur (D1), une fente (15) s'étendant à travers la bille à ressort (12) à partir de la première extrémité axiale (12A) jusqu'à la seconde extrémité axiale (12B), et une première rainure de clavette (12K) s'étendant axiale formée dans la surface intérieure (14) ;
la fourniture d'un arbre (20) ayant une surface de réception de bille (22) formée sur celui-ci, l'arbre (20) ayant un premier bord (24) et un second bord (26) chacun s'étendant radialement vers l'extérieur à partir de la surface de réception de bille (22), et une seconde rainure de clavette (22K) s'étendant axiale formée dans la surface de réception de bille (22) ;
la fourniture d'une clavette (30) ;
la disposition de la clavette (30) dans une parmi la première rainure de clavette (12K) et la seconde rainure de clavette (22K) ;
l'expansion de la bille à ressort (12) au-dessus du second bord (26) ;
le glissement de la bille à ressort (12) au-dessus du second bord (26) de façon à ce que la clavette (30) soit disposée à la fois dans la première rainure de clavette (12K) et la seconde rainure de clavette (22K) ; et
le glissement de la bille à ressort (12) hors du second bord (26) de façon à ce que la bille à ressort (12) soit positionnée entre le premier bord (24) et le second bord (26).

12. Procédé selon la revendication 11, comprenant en outre :
la contraction de la bille à ressort (12) autour de la surface de réception de bille (22) de l'arbre (20) .
